# EUROPEAN PATENT APPLICATION

(11) **EP 4 811 485 A1**
(43) Date of publication of application: **23.09.2026**
(21) Application number: 24891591.0
(22) Date of filing: 09.07.2024
(51) Int. Cl.: H01M 10/0585, H01M 10/0562, H01M 4/58, H01M 4/13, H01M 10/42, H01M 4/62, H01M 4/525, H01M 4/505, H01M 4/02

(54) **ALL-SOLID-STATE RECHARGEABLE BATTERY**

(30) Priority: 17.11.2023 KR 20230159773; 17.11.2023 KR 20230159774; 17.11.2023 KR 20230159775
(71) Applicant: Samsung SDI Co., Ltd., Yongin-si, Gyeonggi-do 17084 (KR)
(72) Inventor: HA, Jaehwan, Yongin-si, Gyeonggi-do 17084 (KR); KANG, Yujin, Yongin-si, Gyeonggi-do 17084 (KR); KOO, Dongho, Yongin-si, Gyeonggi-do 17084 (KR); KIM, Juyun, Yongin-si, Gyeonggi-do 17084 (KR)
(74) Representative: Michalski Hüttermann & Partner mbB
(86) International application number: PCT/KR2024/009790
(87) International publication number: WO 2025/105642

(57) **Abstract**

Some example embodiments provide an all-solid-state rechargeable battery including a positive electrode including a positive electrode current collector, a positive electrode active material layer on the positive electrode current collector, and a safety functional layer on the positive electrode active material layer; a negative electrode; and a solid electrolyte layer between the positive electrode and the negative electrode, wherein the positive electrode active material layer includes a positive electrode active material and a sulfide-based solid electrolyte, the safety functional layer includes an olivine-based positive electrode active material, and the solid electrolyte layer includes the sulfide-based solid electrolyte.

## Description

### [Technical Field]

### [Background Art]

### 1. Field

All-solid-state rechargeable batteries are disclosed.

### 2. Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Because commercially available rechargeable lithium batteries use electrolyte solutions including flammable organic solvents, there are safety issues such as explosion or fire in the event of collision, penetration, and the like. Accordingly, a semi-solid battery or all-solid-state battery that avoids the use of electrolyte solutions is being proposed. An all-solid-state battery is a battery in which all materials are made of solid, particularly a battery that uses solid electrolytes. This all-solid-state battery has the merit of not being charged as there is no risk of explosion due to electrolyte solution leakage and the like, and that it is easy to manufacture a thin battery.

### [Disclosure]

An all-solid-state rechargeable battery is provided that can effectively improve battery safety by reducing the heat generation amount of the battery and preventing thermal runaway.

In some example embodiments, an all-solid rechargeable battery includes a positive electrode including a positive electrode current collector, a positive electrode active material layer on the positive electrode current collector, and a safety functional layer between the positive electrode current collector and the positive electrode active material layer; a negative electrode; and a solid electrolyte layer between the positive electrode and the negative electrode, wherein the positive electrode active material layer includes a positive electrode active material and a sulfide-based solid electrolyte, the safety functional layer includes an olivine-based positive electrode active material, and the solid electrolyte layer includes the sulfide-based solid electrolyte.

The all-solid-state rechargeable battery according to some example embodiments can effectively improve the safety of the battery by reducing the amount of heat generated by the battery and preventing thermal runaway.

### [Description of the Drawings]

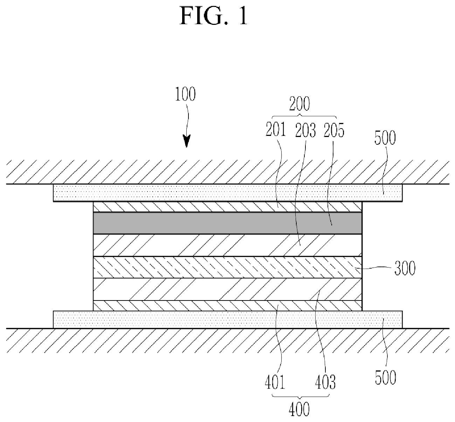

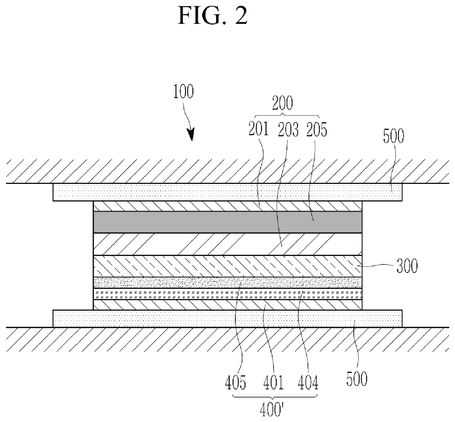

FIGS. 1 and 2 are cross-sectional views schematically showing all-solid-state rechargeable batteries according to some example embodiments.

### [Best Mode]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or length of the long axis) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

Some example embodiments provide an all-solid-state rechargeable battery including a positive electrode, a negative electrode, and a solid electrolyte layer between the positive electrode and the negative electrode.

FIG. 1 is a cross-sectional view of an all-solid-state rechargeable battery according to some example embodiments. Referring to FIG. 1, an all-solid-state rechargeable battery 100 may have a structure that an electrode assembly, in which a negative electrode 400 including a negative electrode current collector 401 and a negative electrode active material layer 403, a solid electrolyte layer 300, and a positive electrode 200 including a positive electrode current collector 201; a positive electrode active material layer on the positive electrode current collector 203; and a safety functional layer 205 between the positive electrode current collector and the positive electrode active material laye; are stacked, is housed in a battery case. The all-solid-state rechargeable battery 100 may further include an elastic layer 500 outside at least one of the positive electrode 200 and the negative electrode 400. FIG. 1 shows one electrode assembly including the negative electrode 400, the solid electrolyte layer 300, and the positive electrode 200, but two or more, 2 to 200, 3 to 100, or 4 to 50 electrode assemblies may be stacked to manufacture an all-solid-state rechargeable battery.

### Positive Electrode

In some example embodiments, an all-solid-state rechargeable battery 100 includes the positive electrode 200 including a positive electrode current collector 201, a positive electrode active material layer 203 on the current collector, and a safety functional layer 205 between the positive electrode current collector and the positive electrode active material layer.

The positive electrode active material layer includes a positive electrode active material and a sulfide-based solid electrolyte, the safety functional layer includes an olivine-based positive electrode active material, and the solid electrolyte layer includes a sulfide-based solid electrolyte. The safety functional layer may further include a sulfide-based solid electrolyte.

The sulfide-based solid electrolyte of the positive electrode active material layer and the sulfide-based solid electrolyte of the solid electrolyte layer may be the same or different. In addition, when the safety functional layer further includes the sulfide-based solid electrolyte, the sulfide-based solid electrolyte of the positive electrode active material layer, the sulfide-based solid electrolyte of the safety functional layer, and the sulfide-based solid electrolyte of the solid electrolyte layer may be the same or different.

### Safety Functional Layer

The safety functional layer 205 includes the olivine-based positive electrode active material.

The olivine-based positive electrode active material is a positive electrode active material with a hexahedral shape, which exhibits, compared to a positive electrode active material with a layered structure, excellent lattice structural stability, less deterioration of its crystal structure even though lithium ions escape during the discharge, and very excellent thermal stability.

The all-solid-state battery according to some example embodiments includes a safety functional layer including the olivine-based positive electrode active material and thus may reduce exothermic heat, when a short circuit occurs between positive and negative electrodes due to internal short circuit or damage caused by an external force (penetration, collision, etc.), and block a direct contact of the positive and negative electrodes to prevent thermal runaway due to collapse of the active material.

The olivine-based positive electrode active material may be a lithium transition metal phosphate, and may include, for example, lithium iron phosphate, lithium manganese iron phosphate, lithium manganese phosphate, lithium titanium phosphate, or a combination thereof.

The olivine-based positive electrode active material may be for example represented by Chemical Formula 1, Chemical Formula 2, Chemical Formula 3, Chemical Formula 4, or Chemical Formula 5.

[Chemical Formula 1] Liₐ₁Fe₍₁₋ₓ₁₎M¹ₓ₁PO₄

In Chemical Formula 1, 0.90≤a1≤1.5, 0≤x1≤0.4 and M¹ is Al, Ca, Ce, Cr, Cu, Co, La, Mg, Mo, Nb, Ni, Sn, Sr, V, W, Y, Zn, Zr, or a combination thereof.

The compound represented by Chemical Formula 1 may be referred to as lithium iron phosphate. In Chemical Formula 1, for example 0.90≤a1≤1.2, or 0.95≤a1≤1.1 and 0≤x1≤0.3, 0≤x1≤0.2, 0≤x1≤0.1, or 0<x1≤0.05. For example, if a1=1 and x1=0, Chemical Formula 1 may be represented by LiFePO₄.

[Chemical Formula 2] Liₐ₂Mnₓ₂Fe_{(1-x2-y2)}M²_{y2}PO₄

In Chemical Formula 2, 0.90≤a2≤1.5, 0.1≤x2≤0.9, M² is Al, Ca, Ce, Cr, Cu, Co, La, Mg, Mo, Nb, Ni, Sn, Sr, V, W, Y, Zn, Zr, or a combination thereof.

The compound represented by Chemical Formula 2 may be referred to as lithium manganese iron phosphate. In Chemical Formula 2, for example 0.90≤a2≤1.2, or 0.95≤a2≤1.1 and 0.2≤x2≤0.8, 0.3≤x2≤0.7, or 0.4≤x2≤0.6. For example, the compound represented by Chemical Formula 2 may be LiMn_{0.9}Fe_{0.1}PO₄, LiMn_{0.8}Fe_{0.2}PO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, LiMn_{0.2}Fe_{0.8}PO₄, or LiMn_{0.1}Fe_{0.9}PO₄.

[Chemical Formula 3] Liₐ₃Mn₍₁₋ₓ₃₎M³ₓ₃PO₄

In Chemical Formula 3, 0.90≤a3≤1.5, 0≤x3≤0.4, and M³ is Al, Ca, Ce, Cr, Cu, Co, La, Mg, Mo, Nb, Ni, Sn, Sr, V, W, Y, Zn, Zr, or a combination thereof.

The compound represented by Chemical Formula 3 may be referred to as lithium manganese phosphate. In Chemical Formula 3, for example 0.90≤a3≤1.2, or 0.95≤a3≤1.1 and 0≤x3≤0.3, 0≤x3≤0.2, 0≤x3≤0.1, or 0<x3≤0.05. For example, if a3=1 and x3=0, Chemical Formula 3 may be represented by LiMnPO₄.

[Chemical Formula 4] Liₐ₄Ti₍₂₋ₓ₄₎M⁴ₓ₄(PO₄)₃

In Chemical Formula 4, 0.90≤a4≤1.5, 0≤x4≤0.4, and M⁴ is Al, Ca, Ce, Cr, Cu, Co, La, Mg, Mo, Nb, Ni, Sn, Sr, V, W, Y, Zn, Zr, or a combination thereof.

The compound represented by Chemical Formula 4 may be referred to as lithium titanium phosphate. In Chemical Formula 4, for example 0.90≤a4≤1.2, or 0.95≤a4≤1.1 and 0≤x4≤0.3, 0≤x4≤0.2, 0≤x4≤0.1, or 0<x4≤0.05. For example, if a4=1 and x4=0, Chemical Formula 4 may be represented by LiTi₂(PO₄)₃

[Chemical Formula 5] Liₐ₅Ti₍₁₋ₓ₅₎M⁵ₓ₅PO₅

In Chemical Formula 5, 0.90≤a5≤1.5, 0≤x5≤0.4, and M⁵ is Al, Ca, Ce, Cr, Cu, Co, La, Mg, Mo, Nb, Ni, Sn, Sr, V, W, Y, Zn, Zr, or a combination thereof.

The compound represented by Chemical Formula 5 may be referred to as lithium titanium phosphate. In Chemical Formula 5, for example 0.90≤a5≤1.2, or 0.95≤a5≤1.1 and 0≤x5≤0.3, 0≤x5≤0.2, 0≤x5≤0.1, or 0<x5≤0.05. For example, if a5=1 and x5=0, Chemical Formula 5 may be represented by LiTiPO₅.

As a specific example, the olivine-based positive electrode active material may include LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe₀₇PO₄, LiMnPO₄, LiTiPO₅, LiTi₂(PO₄)₃, or a combination thereof.

The olivine-based positive electrode active material may be a type of primary particle, and its average particle diameter (D₅₀) may be, for example 10 nm to 2 µm, for example 50 nm to 1.5 µm, 100 nm to 1.0 µm, 100 nm to 1.0 µm, 100 nm to 900 nm, or 100 nm to 600 nm. If the average particle diameter of the olivine-based positive electrode active material satisfies the above range, the safety of the battery can be maximized.

Herein, the average particle diameter means a diameter (D₅₀) of particles having a cumulative volume of 50 volume% in the particle size distribution that is obtained by measuring the size (diameter or length of the major axis) of about 20 particles at random in a scanning electron microscope image for positive electrode active materials.

The olivine-based positive electrode active material may be included in an amount of 70 wt% to 99 wt%, for example 70 wt% to 95 wt%, or 75 wt% to 95 wt%, based on 100 wt% of the safety functional laye. If the above range is satisfied, an all-solid-state rechargeable battery can be implemented that is excellent in reducing the heat generation amount of the battery and preventing thermal runaway

The safety functional layer 205 may further include a sulfide-based solid electrolyte. A detailed description of the sulfide-based solid electrolyte will be described later in the section on the solid electrolyte layer 300.

The sulfide-based solid electrolyte of the safety functional layer may be small particles with an average particle diameter (D₅₀) of 0.1 µm to 1.9 µm. The sulfide-based solid electrolyte may be included in an amount of 1 wt% to 30 wt%, 3 wt% to 30 wt%, 5 wt% to 30 wt%, or 5 wt% to 25 wt% based on 100 wt% of the safety functional layer 205. When included in the above amount range, the safety of the battery can be effectively implemented while ensuring the ionic conductivity of the safety functional layer.

A weight ratio of the olivine-based positive electrode active material and the sulfide-based solid electrolyte included in the safety functional layer may be 70:30 to 97:3, for example, 75:25 to 97:3, or 75:25 to 95:5. When the above weight ratio is satisfied, the safety of the battery can be effectively implemented while ensuring the ionic conductivity of the safety functional layer.

The safety functional layer 205 may optionally further include a binder and/or a conductive material. In case when the safety functional layer 205 further includes the binder, the binder can serve to ensure that the olivine-based positive electrode active material particles adhere to each other and the olivine-based positive electrode active material to the positive electrode active material layer. The conductive material may provide conductivity to the safety functional layer 205.

A detailed description of the binder and the conductive material will be described later in the positive electrode active material layer 203 section.

The content of the binder in the safety functional layer 205 may be 0.1 wt% to 25 wt%, for example 0.1 wt% to 20 wt%, or 0.5 wt% to 15 wt% based on 100 wt% of the safety functional layer. If the above range is satisfied, the safety of the battery can be ensured and the adhesion between olivine-based positive electrode active material particles in the safety functional layer can be improved.

A content of the conductive material in the safety functional layer 205 may be 0 wt% to 20 wt%, for example, 1 wt% to 15 wt%, or 2 wt% to 15 wt% based on 100 wt% of the safety functional layer 205. If the above range is satisfied, conductivity can be provided to the safety functional layer while ensuring the safety of the battery.

A thickness of the safety functional layer 205 may be 1 µm to 15 µm, for example 1 µm to 10 µm, 5 µm to 10 µm, or 5 µm to 8 µm. If the above thickness range is satisfied, an all-solid-state rechargeable battery with excellent safety can be implemented.

### Positive Electrode Active Material Layer

The positive electrode active material layer includes a positive electrode active material and a sulfide-based solid electrolyte, and may optionally include a binder and/or a conductive material.

The positive electrode active material can be applied without limitation as long as it is commonly used in all-solid-state rechargeable batteries. For example, the positive electrode active material may be a compound being capable of intercalating and deintercalating lithium, may include a lithium transition metal composite oxide, and may include a compound represented by any of the following chemical formulas.
LiₐA_{1-b}X_{b}D₂(0.90 ≤ a ≤ 1.8, 0 ≤ b ≤ 0.5);
LiₐA_{1-b}X_{b}O_{2-c}D_{c} (0.90 ≤ a ≤ 1.8, 0 ≤ b ≤ 0.5, 0 ≤ c ≤ 0.05);
LiₐE_{1-b}X_{b}O_{2-c}D_{c} (0.90 ≤ a ≤ 1.8, 0 ≤ b ≤ 0.5, 0 ≤ c ≤ 0.05);
LiₐE_{2-b}X_{b}O_{4-c}D_{c} (0.90 ≤ a ≤ 1.8, 0 ≤ b ≤ 0.5, 0 ≤ c ≤ 0.05);
LiₐNi_{1-b-c}Co_{b}X_{c}D*_{α}* (0.90 ≤ a ≤1.8, 0 ≤ b ≤ 0.5, 0 ≤ c ≤ 0.5,0 *< α* ≤ 2);
LiₐNi_{1-b-c}Co_{b}X_{c}O_{2-*α*}T*_{α}* (0.90 ≤ a ≤ 1.8, 0 ≤ b ≤ 0.5, 0 ≤ c ≤ 0.05, 0 < *α* <2);
LiₐNi_{1-b-c}Co_{b}X_{c}O_{2-*α*}T₂ (0.90 ≤ a ≤ 1.8, 0 ≤ b ≤ 0.5, 0 ≤ c ≤ 0.05, 0 < α <2);
LiₐNi_{1-b-c}Mn_{b}X_{c}D*_{α}* (0.90 ≤ a ≤ 1.8, 0 ≤ b ≤ 0.5, 0 ≤ c ≤ 0.05, 0 < *α* ≤ 2);
LiₐNi_{1-b-c}Mn_{b}X_{c}O_{2-*α*}T*_{α}* (0.90 ≤ a ≤ 1.8, 0 ≤ b ≤ 0.5, 0 ≤ c ≤ 0.05, 0 < *α* < 2);
LiₐNi_{1-b-c}Mn_{b}X_{c}O_{2-*α*}T₂ (0.90 ≤ a ≤ 1.8, 0 ≤ b ≤ 0.5, 0 ≤ c ≤ 0.05, 0 <*α* < 2);
LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);
LiₐNi_{b}Co_{c}Mn_{d}GₑO₂(0.90 ≤ a ≤ 1.8, 0 ≤ b ≤ 0.9, 0 ≤ c ≤ 0.5, 0 ≤ d ≤ 0.5, 0.001 ≤ e ≤ 0.1);
LiₐNiG_{b}O₂ (0.90 ≤ a ≤ 1.8, 0.001 ≤ b ≤ 0.1);
LiₐCoG_{b}O₂(0.90 ≤ a ≤ 1.8, 0.001 ≤ b ≤ 0.1);
LiₐMn_{1-b}G_{b}O₂ (0.90 ≤ a ≤ 1.8, 0.001 ≤ b ≤ 0.1);
LiₐMn₂G_{b}O₄ (0.90 ≤ a ≤ 1.8, 0.001 ≤ b ≤ 0.1);
LiₐMn_{1-g}G_{g}PO₄ (0.90 ≤ a ≤ 1.8, 0 ≤ g ≤ 0.5);
QO₂; QS₂; LiQS₂;
V₂O₅; LiV₂O₅;
LiZO₂;
LiNiVO₄;
Li_{(3-f)}J₂₍PO₄)₃(0 ≤ f ≤ 2);
Li_{(3-f)}Fe₂(PO₄)₃(0 ≤ f ≤ 2); and
LiₐFePO₄(0.90 ≤ a ≤ 1.8).

In the chemical formulas, A is selected from Ni, Co, Mn, and a combination thereof; X is selected from Al, Ni, Co, Mn, Cr, Fe, Mg, Sr, V, rare earth elements, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The positive electrode active material may be, for example, a lithium cobalt oxide (LCO), a lithium nickel oxide (LNO), a lithium nickel cobalt oxide (NC), a lithium nickel cobalt aluminum oxide (NCA), a lithium nickel cobalt manganese oxide (NCM), a lithium nickel manganese oxide (NM), a lithium manganese oxide (LMO), or lithium iron phosphate (LFP).

The positive electrode active material may include for example lithium nickel-based oxide represented by Chemical Formula 6, lithium cobalt-based oxide represented by Chemical Formula 7, lithium iron phosphate-based compound represented by Chemical Formula 8, cobalt-free lithium nickel-manganese-based oxide represented by Chemical Formula 9, or a combination thereof and as a specific example lithium nickel-based oxide represented by Chemical Formula 6 or lithium cobalt-based oxide represented by Chemical Formula 7.

[Chemical Formula 6] Liₐ₆Niₓ₆M⁶_{y6}M⁷_{z6}O_{2-b6}X_{b6}

In Chemical Formula 6, 0.9≤a6≤1.8, 0.3≤x6≤1, 0≤y6≤0.7, 0≤z6≤0.7, 0.9≤ x6+y6+z6≤1.1, and 0≤b6≤0.1, M⁶ and M⁷ are each independently one or more elements selected from Al, B, Ba, Ca, Ce, Co, Cr, Cu, Fe, Mg, Mn, Mo, Nb, Si, Sn, Sr, Ti, V, W, and Zr, and X is one or more elements selected from F, P and S.

In Chemical Formula 6, 0.6≤x6≤1, 0≤y6≤0.4, and 0≤z6≤0.4 or 0.8≤x6≤1, 0≤y6≤0.2, and 0≤z6≤0.2.

[Chemical Formula 7] Liₐ₇Coₓ₇M⁸_{y7}O_{2-b7}X_{b7}

In Chemical Formula 7, 0.9≤a7≤1.8, 0.7≤x7≤1, 0≤y7≤0.3, 0.9≤x7+y7≤1.1, and 0≤b7≤0.1, M⁸ is one or more elements selected from Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from F, P, and S.

[Chemical Formula 8] Liₐ₈Feₓ₈M⁹_{y8}PO_{4-b8}X_{b8}

In Chemical Formula 8, 0.9≤a8≤1.8, 0.6≤x8≤1, 0≤y8≤0.4, and 0≤b8≤0.1, M⁹ is one or more elements selected from Al, B, Ba, Ca, Ce, Co, Cr, Cu, Mg, Mn, Mo, Ni, Se, Si, Sn, Sr, Ti, V, W, Y, Zn, and Zr, and X is one or more elements selected from F, P, and S.

[Chemical Formula 9] Liₐ₉Niₓ₉Mn_{y9}M¹⁰_{z9}O_{2-b9}X_{b9}

In Chemical Formula 9, 0.9≤a9≤1.8, 0.8≤x9<1, 0<y9≤0.2, 0≤z9≤0.2, 0.9≤ x9+y9+z9≤1.1, and 0≤b9≤0.1, M¹⁰ is one or more elements selected from Al, B, Ba, Ca, Ce, Cr, Fe, Mg, Mo, Nb, Si, Sn, Sr, Ti, V, W, and Zr, and X is one or more elements selected from F, P and S.

The average particle diameter (D₅₀) of the positive electrode active material may be 1 µm to 25 µm, for example 3 µm to 25 µm, 1 µm to 20 µm, 1 µm to 18 µm, 3 µm to 15 µm, or 5 µm to 15 µm. As an example, the positive electrode active material may include small particles having an average particle diameter (D₅₀) of 1 µm to 9 µm and large particles having an average particle diameter (D₅₀) of 10 µm to 25 µm. The positive electrode active material having this particle size range can be harmoniously mixed with other components within the positive electrode active material layer and can achieve high capacity and high energy density. Herein, the average particle diameter may be obtained by selecting about 20 particles at random in the scanning electron microscope image of the positive electrode active material, measuring the particle diameter (e.g., diameter, long axis, or length of the long axis) to obtain the particle size distribution, and taking the diameter (D₅₀) of particles with a cumulative volume of 50 volume% as the average particle diameter in the particle size distribution.

The positive electrode active material may be in the form of secondary particles made by agglomerating a plurality of primary particles, or may be in the form of single particles. Additionally, the positive electrode active material may have a spherical or close to spherical shape, or may have a polyhedral or irregular shape.

Meanwhile, the positive electrode active material may include a buffer layer on the particle surface. The buffer layer can be expressed as a coating layer, a protective layer, etc., and can play a role in lowering the interfacial resistance between the positive electrode active material and the sulfide-based solid electrolyte particles. As an example, the buffer layer may include lithium-metal-oxide, wherein the metal may be, for example, one or more elements selected from Al, B, Ca, Ce, Cr, Fe, Mg, Mo, Nb, Si, Sn, Sr, Ta, V, W, and Zr. The lithium-metal-oxide is excellent for improving the performance of the positive electrode active material by facilitating the movement of lithium ions and electronic conduction, while lowering the interfacial resistance between the positive electrode active material and solid electrolyte particles.

The positive electrode active material may be included in an amount of 55 wt% to 99.5 wt%, for example, 65 wt% to 95 wt%, or 75 wt% to 91 wt%, based on 100 wt% of the positive electrode active material layer.

The positive electrode active material layer 203 includes a sulfide-based solid electrolyte, and a detailed description thereof will be provided later in the solid electrolyte layer 300 section.

The sulfide-based solid electrolyte of the positive electrode active material layer may be small particles with an average particle diameter (D₅₀) of 0.1 µm to 1.9 µm.

The sulfide-based solid electrolyte may be included in an amount of 0.1 wt% to 35 wt%, for example 1 wt% to 35 wt%, 5 wt% to 30 wt%, 8 wt% to 25 wt%, or 10 wt% to 20 wt% based on 100 wt% of the positive electrode active material layer 100 wt%.

Additionally, the positive electrode active material may be included in an amount of 65 wt% to 99 wt% and the sulfide-based solid electrolyte may be included in an amount of 1 wt% to 35 wt%, and for example the positive electrode active material may be included in an amount of 80 wt% to 90 wt% and the sulfide-based solid electrolyte may be included in an amount of 10 wt% to 20 wt% based on a total weight of the positive electrode active material and the sulfide-based solid electrolyte in the positive electrode active material layer. If the sulfide-based solid electrolyte is included in the positive electrode at this amount, the efficiency and cycle-life characteristics of the all-solid-state battery can be improved without reducing capacity.

In case when the binder is further included in the positive electrode active material layer 203, the binder serves to adhere the positive electrode active material particles to each other and also to properly attach the positive electrode active material to the current collector.

The binder may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or a combination, but is not limited thereto.

A content of the binder may be 0.1 wt% to 5 wt% in the positive electrode active material layer 203 based on 100 wt% of the positive electrode active material layer.

The positive electrode active material layer 203 may further include conductive material. The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

A content of the conductive material in the positive electrode active material layer may be 0 wt% to 3 wt%, 0.01 wt% to 2 wt%, or 0.1 wt% to 1 wt% based on 100 wt% of the positive electrode active material layer.

Aluminum foil may be used as the positive electrode current collector 201, but the present disclosure is not limited thereto.

### Solid Electrolyte Layer

The solid electrolyte layer 300 includes a solid electrolyte, and the solid electrolyte includes a sulfide-based solid electrolyte.

The sulfide-based solid electrolyte may include, for example Li₂S-P₂S₅, Li₂S-P₂S₅-LiX (wherein X is a halogen element, for example I or CI), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are an integer, respectively, and Z is Ge, Zn, or Ga), Li₂S-GeS₂, Li₂S-SiS₂-Li₃PO₄, Li₂S-SiS₂-LiₚMO_{q} (wherein p and q are integers, and M is P, Si, Ge, B, Al, Ga, or In), or a combination thereof.

Such a sulfide-based solid electrolyte may be obtained by, for example, mixing Li₂S and P₂S₅ in a molar ratio of 50:50 to 90:10 or 50:50 to 80:20 and optionally, performing heat-treatment. Within the above mixing ratio range, a sulfide-based solid electrolyte having excellent ionic conductivity may be prepared. The ionic conductivity may be further improved by adding SiS₂, GeS₂, B₂S₃, and the like as other components thereto.

Mechanical milling or a solution method may be applied as a mixing method of sulfur-containing raw materials for preparing a sulfide-based solid electrolyte. The mechanical milling is to make starting materials into particulates by putting the starting materials in a ball mill reactor and fervently stirring them. The solution method may be performed by mixing the starting materials in a solvent to obtain a solid electrolyte as a precipitate. In addition, in the case of heat-treatment after mixing, crystals of the solid electrolyte may be more robust and ionic conductivity may be improved. For example, the sulfide-based solid electrolyte may be prepared by mixing sulfur-containing raw materials and performing heat treatment two or more times. In this case, a sulfide-based solid electrolyte having high ionic conductivity and robustness may be prepared.

The sulfide-based solid electrolyte particles according to some example embodiments may be, for example, prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be performed in an inert gas or nitrogen atmosphere, respectively. The first heat treatment may be performed for 1 hour to 10 hours, and the second heat treatment may be performed for 5 hours to 20 hours. Small raw materials may be milled through the first heat treatment, and a final solid electrolyte can be synthesized through the second heat treatment. Through such two or more heat treatments, a sulfide-based solid electrolyte having high ionic conductivity and high performance can be obtained, and such a solid electrolyte may be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600 °C.

For example, the sulfide-based solid electrolyte particles may include argyrodite-type sulfide. The argyrodite-type sulfide-based solid electrolyte may have high ionic conductivity close to the range of 10⁻⁴ to 10⁻² S/cm, which is the ionic conductivity of general liquid electrolytes at room temperature, and may form an intimate bond between the positive electrode active material and the solid electrolyte without causing a decrease in ionic conductivity, and furthermore, an intimate interface between the electrode layer and the solid electrolyte layer. An all-solid-state rechargeable battery including the same may have improved battery performance such as rate capability, coulombic efficiency, and cycle-life characteristics.

For example, the argyrodite-type sulfide-based solid electrolyte may include a compound represented by Chemical Formula 10.

[Chemical Formula 10] (LiₐM¹¹_{b}M¹²_{c})(P_{d}M¹³ₑ)(S_{f}M¹⁴_{g})Xₕ

In Chemical Formula 10, 4 ≤a ≤8, M¹¹ is Mg, Cu, Ag, or a combination thereof, 0≤b<0.5, M¹² is Na, K, or a combination thereof, 0≤c<0.5, M¹³ is Sn, Zn, Si, Sb, Ge, or a combination thereof, 0<d<4, 0 ≤ e<1, M¹⁴ is O, SOₙ, or a combination thereof, 1.5≤n≤5, 3≤f≤12, 0≤g<2, X is F, Cl, Br, I, or a combination thereof, and 0≤h≤2.

For example, in Chemical Formula 10, a halide element (X) may be necessarily included, and in this case, it may be expressed as 0<h≤2. For example, the M¹¹ element may be necessarily included in Chemical Formula 10, and in this case, it may be expressed as 0<b<0.5. In Chemical Formula 10, M¹³ may be understood as an element substituted for P and may be 0<e<1. In Chemical Formula 10, M¹⁴ is substituted for S and, for example, may be 0<g<2, and f, a ratio of S, may be, for example, 3≤f≤7. If M¹⁴ is SOₙ, SOₙ may be, for example, S₄O₆, S₃O₆, S₂O₃, S₂O₄, S₂O₅, S₂O₆, S₂O₇, S₂O₃, SO₄, or SO₅, and for example, may be SO₄.

For example, in Chemical Formula 10, a+b+c+h=7, d+e=1, and f+g+h=6.

As a specific example, the argyrodite-type sulfide-based solid electrolyte may include Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, Li_{5.75}PS_{4.75}Cl_{1.25}, (Li_{5.69}Cu_{0.06})PS_{4.75}Cl_{1.25}, (Li_{5.72}Cu_{0.03})PS_{4.75}Cl_{1.25}, (Li_{5.69}Cu_{0.06})P(S_{4.70}(SO₄)_{0.05})Cl_{1.25}, (Li_{5.69}Cu_{0.06})P(S_{4.60}(SO₄)_{0.15})Cl_{1.25}, (Li_{5.72}Cu_{0.03})P(S_{4.725}(SO₄)_{0.025})Cl_{1.25}, (Li_{5.72}Na_{0.03})P(S_{4.725}(SO₄)_{0.025})Cl_{1.25}, Li_{5.75}P(S_{4.725}(SO₄)_{0.025})Cl_{1.25}, or a combination thereof, but are not limited thereto.

The argyrodite-type sulfide-based solid electrolyte may be prepared, for example, by mixing raw materials of lithium sulfide and phosphorus sulfide, and optionally lithium halide. Heat treatment may be performed after mixing them. The heat treatment may be carried out at a temperature range of 400 °C to 600 °C, for example 450 °C to 500 °C, or 460 °C to 490 °C, for 5 hours to 30 hours, 10 hours to 24 hours, or 15 hours to 20 hours. If heat treated under the above conditions, ionic conductivity may be maximized. The heat treatment may include, for example, two or more heat treatment steps. The method of preparing the argyrodite-type sulfide-based solid electrolyte may include, for example, a first heat treatment in which raw materials are mixed and fired at 120 °C to 350 °C, and a second heat treatment in which the resultant of the first heat treatment is mixed again and fired at 350 °C to 800 °C.

An average particle diameter (D₅₀) of the sulfide-based solid electrolyte particles may be, for example, 0.1 µm to 5.0 µm or 0.1 µm to 3.0 µm, and may be small particles of 0.1 µm to 1.9 µm or large particles of 2.0 µm to 5.0 µm. The sulfide-based solid electrolyte particles may be a mixture of small particles having an average particle diameter of 0.1 µm to 1.9 µm and large particles having an average particle diameter of 2.0 µm to 5.0 µm.

The average particle diameter of the sulfide-based solid electrolyte particles may be measured using an electron microscope image, and for example, a particle size distribution may be obtained by measuring the size (diameter or length of the long axis) of about 20 particles in a scanning electron microscope image, and D₅₀ may be calculated therefrom.

The sulfide-based solid electrolyte may be included in an amount of 90 wt% to 99 wt%, for example 95 wt% to 99 wt%, based on 100 wt% of the solid electrolyte layer.

The solid electrolyte layer may further include an oxide-based solid electrolyte, a halide-based solid electrolyte, or a combination thereof.

The oxide-based solid electrolyte may include, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0 ≤ y<3), BaTiO₃, Pb(Zr,Ti)O₃ (PZT), Pb₁₋ₓLaₓZr_{1-y}Ti_{y}O₃ (PLZT) (0 ≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO,

ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x ≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (wherein M = Te, Nb, or Zr; x is an integer of 1 to 10), or a mixture thereof.

The solid electrolyte layer may further include, for example, a halide-based solid electrolyte. The halide-based solid electrolyte may include a halogen element as a main component, meaning that a ratio of the halide element to all elements constituting the solid electrolyte is 50 mol% or more, 70 mol% or more, 90 mol% or more, or 100 mol%. As an example, the halide-based solid electrolyte may not include sulfur element.

The halide-based solid electrolyte may include a lithium element, a metal element other than lithium, and a halogen element. The metal element other than lithium may include Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof. The halogen element may be F, Cl, Br, I, or a combination thereof, and for example, it may be Cl, Br, or a combination thereof. The halide-based solid electrolyte may be, for example, represented by LiₐM₁X₆ (M is Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof, X is F, Cl, Br, I, or a combination thereof, and 2≤a≤3). The halide-based solid electrolyte may include, for example, Li₂ZrCl₆, Li_{2.7}Y_{0.7}Zr_{0.3}Cl₆, Li_{2.5}Y_{0.5}Zr_{0.5}Cl₆, Li_{2.5}In_{0.5}Zr_{0.5}Cl₆, Li₂In_{0.5}Zr_{0.5}Cl₆, Li₃YBr₆, Li₃YCl₆, Li₃YBr₂Cl₄, Li₃YbCl₆, Li_{2.6}Hf_{0.4}Yb_{0.6}Cl₆, or a combination thereof, but is not limited thereto.

The solid electrolyte layer may further include a binder. The binder may include, for example a nitrile-butadiene rubber, a hydrogenated nitrile-butadiene rubber, a styrene-butadiene rubber, an acrylated styrene-butadiene rubber, an acrylonitrile-butadiene rubber, an acrylic rubber, a butyl rubber, a fluorine rubber, a natural rubber, polydimethylsiloxane, polyethyleneoxide, polyvinylpyrrolidone, polyvinylpyridine, chlorosulfonatedpolyethylene, polyvinyl alcohol, polytetrafluoroethylene, polyvinylidene fluoride, a polyvinylidene fluoride-hexafluoropropylene copolymer, polyvinylchloride, carboxylated polyvinylchloride, polyvinylfluoride, polyethylene, polypropylene, an ethylene-propylene copolymer, an ethylene-propylene-diene copolymer, polyamideimide, polyimide, poly(meth)acrylate, polyacrylonitrile, polystyrene, polyurethane, a copolymer thereof, or a combination thereof.

The binder may be included in an amount of 0.1 wt% to 3 wt%, for example 0.5 wt% to 2 wt%, 0.5 wt% to 1.5 wt%, based on 100 wt% of the solid electrolyte layer. If the binder is included in the above range, the components in the solid electrolyte layer can be well combined without reducing the ionic conductivity of the solid electrolyte, thereby improving durability and reliability of the battery.

The solid electrolyte layer may optionally further include an alkali metal salt, and/or an ionic liquid, and/or a conductive polymer.

The alkali metal salt may be, for example, a lithium salt. A content of the lithium salt in the solid electrolyte layer may be greater than or equal to 1 M, for example, 1 M to 4 M. In this case, the lithium salt may improve ionic conductivity by improving lithium ion mobility of the solid electrolyte layer.

The lithium salt may be applied without type limitations, and may include, for example, LiPF₆, LiBF₄, LiSbF₆, LiAsF₆, LiClO₄, LiAlO₂, LiAlCl₄, LiPO₂F₂, LiCl, Lil, LiSCN, LiN(CN)₂, lithium bis(oxalato)borate (LiBOB), lithium difluoro (oxalato)borate (LiDFOB), lithium difluorobis(oxalato)phosphate (LiDFBP), lithium bis(trifluoromethanesulfonyl)imide (LiTFSI), lithium bis(fluoro)sulfonyl)imide (LiFSI), lithium bis(pentafluoroethanesulfonyl)imide (LiBETI), lithium trifluoromethane sulfonate, lithium tetrafluoroethane sulfonate, or a combination thereof.

For example, the lithium salt may be an imide-based lithium salt such as LiTFSI, LiFSI, LiBETI, or a combination thereof. The imide-based lithium salt may maintain or improve ionic conductivity by appropriately maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including at least one cation selected from a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

The ionic liquid may be, for example, one or more selected from N-methyl-N-propylpyrrolidinium bis(trifluoromethanesulfonyl)imide, N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, for example, 10:90 to 90:10, 20:80 to 90:10, 30:70 to 90: 10, 40:60 to 90:10, or 50:50 to 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state rechargeable battery may be improved.

A thickness of the solid electrolyte layer 300 may be 5 µm to 200 µm, for example, 20 µm to 150 µm, or 40 µm to 100 µm.

### Negative Electrode

A negative electrode for an all-solid-state rechargeable battery includes a current collector and a negative electrode active material layer on the current collector. The negative electrode active material layer includes a negative electrode active material, may further include a binder and/or a conductive material, and may optionally include the aforementioned solid electrolyte.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may be silicon, a silicon-carbon composite, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), and the Sn-based negative electrode active material may be Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn) and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

As an example, the negative electrode active material may include silicon-carbon composite particles. An average particle diameter (D₅₀) of the silicon-carbon composite particles may be, for example, 0.5 µm to 20 µm. The average particle diameter (D₅₀) is measured with a particle size analyzer and means a diameter of particles with a cumulative volume of 50 volume% in the particle size distribution. Silicon may be included in an amount of 10 wt% to 60 wt% and carbon may be included in an amount of 40 wt% to 90 wt% based on 100 wt% of the silicon-carbon composite particles. For example, the silicon-carbon composite particles may include a core including silicon particles, and a carbon coating layer on the surface of the core. An average particle diameter (D₅₀) of the silicon particles may be 10 nm to 1 µm or 10 nm to 200 nm in the core. The silicon particles may exist as silicon alone, in the form of a silicon alloy, or in an oxidized form. The oxidized form of silicon may be represented by SiOₓ (0<x<2). In addition, a thickness of the carbon coating layer may be about 5 nm to about 100 nm.

As an example, the silicon-carbon composite particles may include a core including silicon particles and crystalline carbon, and a carbon coating layer disposed on the surface of the core and including amorphous carbon. For example, in the silicon-carbon composite particles, amorphous carbon may not exist in the core but only in the carbon coating layer. **The** crystalline carbon may be artificial graphite, natural graphite, or a combination thereof, and the amorphous carbon may be may be formed from coal-based pitch, mesophase pitch, petroleum-based pitch, coal-based oil, heavy petroleum oil, or a polymer resin (phenolic resin, furan resin, polyimide, etc.). Herein, a content of the crystalline carbon may be 10 wt% to 70 wt% and a content of the amorphous carbon may be 20 wt% to 40 wt% based on 100 wt% of the silicon-carbon composite particles.

**In** the silicon-carbon composite particle, the core may include a void in the center. A radius of the void may be 30 length% to 50 length% of the radius of the silicon-carbon composite particle.

The aforementioned silicon-carbon composite particles effectively suppress problems such as volume expansion, structural collapse, or particle crushing due to charging and discharging, prevent disconnection of conductive paths, achieve high capacity and high efficiency, and is advantageous to use under a high-voltage or high-speed charging conditions.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of 1:99 to 90:10.

In the negative electrode active material layer, the negative electrode active material may be included in an amount of 95 wt% to 99 wt% based on the total weight of the negative electrode active material layer.

In some example embodiments, the negative electrode active material layer further includes the binder and optionally may further include the conductive material. A content of the binder in the negative electrode active material layer may be 1 wt% to 5 wt% based on a total weight of the negative electrode active material layer. In addition, if a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

The water-insoluble binder may be polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity as a type of thickener may be further included. As this cellulose-based compound, one or more types of carboxymethyl cellulose, hydroxypropylmethyl cellulose, methyl cellulose, or an alkali metal salt thereof may be used. The alkali metal may be Na, K, or Li. The amount of the thickener used may be 0.1 parts by weight to 3 parts by weight based on 100 parts by weight of the negative electrode active material.

The conductive material is used to impart conductivity to the electrode, and any material that does not cause chemical change and conducts electrons can be used in the battery. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

As another example, the negative electrode for an all-solid-state rechargeable battery may be a precipitation-type negative electrode. The precipitation-type negative electrode does not include a negative electrode active material during battery assembly, but may refer to a negative electrode in which lithium metal, etc. is precipitated or electrodeposited on the negative electrode during battery charging, thereby serving as a negative electrode active material.

FIG. 2 is a schematic cross-sectional view of an all-solid-state rechargeable battery including a precipitation-type negative electrode. Referring to FIG. 2, the precipitation-type negative electrode 400' may include a current collector 401 and a negative electrode coating layer 405 on the current collector. **In** an all-solid-state rechargeable battery having such a precipitation-type negative electrode 400', initial charging begins in the absence of negative electrode active material, and during charging, high-density lithium metal is precipitated or electrodeposited between the current collector 401 and the negative electrode coating layer 405 or on the negative electrode coating layer 405 to form a lithium metal layer 404, which can serve as a negative electrode active material. Accordingly, in an all-solid-state rechargeable battery that has been charged at least once, the precipitation-type negative electrode 400' may include, for example, a current collector 401, a lithium metal layer 404 on the current collector 401, and a negative electrode coating layer 405 on the metal layer 404. The lithium metal layer 404 may be referred to as a layer in which lithium metal, etc. is precipitated during the charging process of the battery, and may be referred to as a metal layer, lithium layer, lithium electrodeposition layer, or negative electrode active material layer.

In this case, the aforementioned region or the first solid electrolyte layer may be a surface in contact with the negative electrode coating layer 405.

The negative electrode coating layer 405 may also be referred to as a lithium electrodeposition inducing layer or a negative electrode catalyst layer, and may include a metal, a carbon material, or a combination thereof that acts as a catalyst.

The metal may be a lithiophilic metal and may include, for example, gold, platinum, palladium, silicon, silver, aluminum, bismuth, tin, zinc, or a combination thereof, and may be composed of one of these or various types of alloys. When the metal exists in particle form, its average particle diameter (D₅₀) may be less than or equal to about 4 µm, for example, 10 nm to 4 µm.

The carbon material may be, for example, crystalline carbon, amorphous carbon, or a combination thereof. The crystalline carbon may be, for example, natural graphite, artificial graphite, mesophase carbon microbeads, or a combination thereof. The amorphous carbon may be, for example, carbon black, activated carbon, acetylene black, denka black, ketjen black, or a combination thereof.

If the negative electrode coating layer 405 includes both the metal and the carbon material, a mixing ratio of the metal and the carbon material may be, for example, a weight ratio of 1:10 to 2:1. In this case, precipitation of lithium metal can be effectively promoted and the characteristics of the all-solid-state rechargeable battery can be improved. For example, the negative electrode coating layer 405 may include a carbon material on which a catalyst metal is supported, or may include a mixture of metal particles and carbon material particles.

For example, the negative electrode coating layer 405 may include the lithiophilic metal and amorphous carbon, and in this case, it can effectively promote precipitation of lithium metal. As a specific example, the negative electrode coating layer 405 may include a composite in which a lithiophilic metal is supported on amorphous carbon.

The negative electrode coating layer 405 may further include a binder, and the binder may be, for example, a conductive binder. Additionally, the negative electrode coating layer 405 may further include general additives such as a filler, a dispersant, an ion conductive agent, and the like.

A thickness of the negative electrode coating layer 405 may be, for example, 100 nm to 20 µm, or 500 nm to 10 µm, or 1 µm to 5 µm.

The precipitation-type negative electrode 400' may further include a thin film, for example, on the surface of the current collector, that is, between the current collector and the negative electrode catalyst layer. The thin film may include an element capable of forming an alloy with lithium. The element capable of forming an alloy with lithium may be, for example, gold, silver, zinc, tin, indium, silicon, aluminum, bismuth, and the like, which may be used alone or an alloy of more than one. The thin film may further planarize a precipitation shape of the lithium metal layer 404 and much improve characteristics of the all-solid-state rechargeable battery. The thin film may be formed, for example, in a vacuum deposition method, a sputtering method, a plating method, and the like. The thin film may have, for example, a thickness of 1 nm to 500 nm.

The lithium metal layer 404 may include a lithium metal or a lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy.

A thickness of the lithium metal layer 404 may be 1 µm to 500 µm, 1 µm to 200 µm, 1 µm to 100 µm, or 1 µm to 50 µm. If the thickness of the lithium metal layer 404 is too thin, it is difficult to perform the role of a lithium storage, and if it is too thick, the battery volume may increase and performance may deteriorate.

When applying such a precipitation-type negative electrode, the negative electrode coating layer 405 may serve to protect the lithium metal layer 404 and suppress the precipitation growth of lithium dendrite. Accordingly, short circuit and capacity degradation of the all-solid-state battery may be suppressed and cycle-life characteristics can be improved.

An all-solid-state rechargeable battery may be a unit cell with a structure of positive electrode/solid electrolyte layer/negative electrode, a bicell with a structure of negative electrode/solid electrolyte layer/positive electrode/solid electrolyte layer/negative electrode, or a stacked battery in which the structure of the unit cell is repeated.

The shape of the all-solid-state rechargeable battery is not particularly limited, and may be, for example, coin-shaped, button-shaped, sheet-shaped, stacked-shaped, cylindrical, flat, etc. Additionally, the all-solid-state rechargeable battery may also be applied to large batteries used in electric vehicles, etc. For example, the all-solid-state rechargeable battery may also be used in hybrid vehicles such as plug-in hybrid electric vehicles (PHEV). In addition, it may be used in a field requiring a large amount of power storage, and may be used, for example, in an electric bicycle or a power tool. In addition, the all-solid-state rechargeable battery may be used in various fields such as portable electronic devices.

### [Mode for Invention]

Hereinafter, examples of the present invention and comparative examples are described. It is to be understood, however, that the examples are for the purpose of illustration and are not to be construed as limiting the present invention.

### Example 1-1

### 1. Manufacturing of Positive Electrode

A safety functional layer composition was prepared by mixing 5 parts by weight of PVdF binder with 100 parts by weight of LiFePO₄, an olivine-based positive electrode active material, and this was coated on the positive electrode current collector and dried to form a about 5 µm-thick safety functional layer.

84.9 wt% of a LiNi_{0.945}Co_{0.04}Al_{0.015}O₂ positive electrode active material, 13.61 wt% of Li₆PS₅Cl of an argyrodite-type solid electrolyte (D₅₀=1 µm), 1 wt% of a PVdF binder, 0.35 wt% of a carbon nanotube conductive material, and 0.14 wt% of a hydrogenated nitrile butadiene rubber (HNBR) as a dispersant were mixed in an isobutyryl isobutyrate (IBIB) solvent to prepare a positive electrode composition. This positive electrode composition was coated on a positive electrode current collector and then, dried to form a positive electrode active material layer. Subsequently, a warm isostatic press (WIP; 500 Mpa, 85 °C, 30 min) was applied thereto to prepare a positive electrode.

### 2. Manufacturing of All-solid-state Rechargeable Battery Cell

Carbon black with a primary particle diameter of about 30 nm and silver (Ag) with an average particle diameter (D₅₀) of about 60 nm were mixed in a weight ratio of 3:1 to prepare an Ag/C composite, and 0.25 g of the composite was added to 2 g of an NMP solution including 7 wt% of a polyvinylidene fluoride binder and then, mixed to prepare a negative electrode coating layer composition. This negative electrode coating layer composition was coated on a negative current electrode collector and then, dried to form a negative electrode coating layer on the current collector, thereby manufacturing a precipitation-type negative electrode.

A composition for a solid electrolyte layer was prepared by mixing Li₆PS₅Cl (D₅₀=3 µm) of an argyrodite-type solid electrolyte with an IBIB solvent including an acryl-based binder. The composition included 98.5 wt% of the solid electrolyte and 1.5 wt% of the binder. The composition was cast on a releasing film and then, dried at room temperature to form a solid electrolyte layer.

The manufactured positive electrode, negative electrode, and solid electrolyte layer were cut to stack the solid electrolyte layer on the negative electrode and subsequently, the positive electrode thereon. The obtained stack was sealed into a pouch shape and then, treated with a warm isostatic press at 500 MPa at a high temperature of 80 °C for 30 minutes to manufacture an all-solid-state rechargeable battery cell.

### Example 1-2

A positive electrode and an all-solid-state rechargeable battery cell were manufactured substantially in the same manner as in Example 1-1 except that the thickness of the safety functional layer was changed to 8 µm in the manufacture of the positive electrode.

### Example 1-3

A positive electrode and an all-solid-state rechargeable battery cell were manufactured substantially in the same manner as in Example 1-1 except that the thickness of the safety functional layer was changed to 10 µm in the manufacture of the positive electrode.

### Comparative Example 1-1

A positive electrode and an all-solid-state rechargeable battery cell were manufactured substantially in the same manner as in Example 1-1 except that the positive electrode active material layer alone was formed on the current collector without introducing the safety functional layer in the manufacture of the positive electrode.

### Comparative Example 1-2

A positive electrode and an all-solid-state rechargeable battery cell were manufactured substantially in the same manner as in Example 1-1 except that the thickness of the safety functional layer was changed to 3 µm in the manufacture of the positive electrode.

### Comparative Example 1-3

A positive electrode and an all-solid-state rechargeable battery cell were manufactured substantially in the same manner as in Example 1-1 except that the thickness of the safety functional layer was changed to 15 µm in the manufacture of the positive electrode.

### Example 2-1

### 1. Manufacturing of Positive Electrode

95 wt% of LiFePO₄ of an olivine-based positive electrode active material and 5 wt% of Li₆PS₅Cl (D₅₀=1 *µ*m) of a solid electrolyte were mixed, 5 parts by weight of a PVdF binder based on 100 parts by weight of the mixture was mixed therewith to prepare a safety functional layer composition. The safety functional layer composition was coated on a positive electrode current collector and then, dried to form about 5 *µ*m-thick safety function layer.

Otherwise, a positive electrode and an all-solid-state rechargeable battery cell were manufactured in substantially the same manner as Example 1-1.

### Example 2-2

A positive electrode and an all-solid-state rechargeable battery cell were manufactured substantially in the same manner as in Example 2-1, except that the weight ratio of LiFePO₄ and Li₆PS₅Cl in the safety functional layer of the positive electrode was changed to 90:10.

### Example 2-3

A positive electrode and an all-solid-state rechargeable battery cell were manufactured substantially in the same manner as in Example 2-1, except that the weight ratio of LiFePO₄ and Li₆PS₅Cl in the safety functional layer of the positive electrode was changed to 85:15.

### Example 2-4

A positive electrode and an all-solid-state rechargeable battery cell were manufactured substantially in the same manner as in Example 2-1, except that the weight ratio of LiFePO₄ and Li₆PS₅Cl in the safety functional layer of the positive electrode was changed to 80:20.

### Example 2-5

A positive electrode and an all-solid-state rechargeable battery cell were manufactured substantially in the same manner as in Example 2-1, except that the weight ratio of LiFePO₄ and Li₆PS₅Cl in the safety functional layer of the positive electrode was changed to 75:25.

### Comparative Example 2-1

A positive electrode and an all-solid-state rechargeable battery cell were manufactured substantially in the same manner as in Example 2-1 except that the positive electrode active material layer alone was formed on the current collector without introducing the safety functional layer in the manufacturing of the positive electrode.

### Example 3-1

### 1. Manufacturing of Positive Electrode

85 wt% of LiFePO₄ of an olivine-based positive electrode active material and 15 wt% of Li₆PS₅Cl (D₅₀=1 *µ*m) of a solid electrolyte were mixed, 5 parts by weight of a PVdF binder and 0.5 parts by weight of CNT conductive material based on 100 parts by weight of the mixture were mixed therewith to prepare a safety functional layer composition. The safety functional layer composition was coated on a positive electrode current collector and then, dried to form about 5 *µ*m-thick safety function layer.

Otherwise, a positive electrode and an all-solid-state rechargeable battery cell were manufactured in substantially the same manner as Example 1-1.

### Examples 3-2 to 3-8

Positive electrode and all-solid-state rechargeable battery cells were manufactured substantially in the same manner as in Example 3-1, except that the amounts of the CNT conductive material in the safety functional layer of the positive electrode were changed as shown in Table 3.

### Comparative Example 3-1

A positive electrode and an all-solid-state rechargeable battery cell were manufactured substantially in the same manner as in Example 3-1 except that the positive electrode active material layer alone was formed on the current collector without introducing the safety functional layer in the manufacturing of the positive electrode.

### (Evaluation Examples)

### Evaluation Example 1-1: Evaluation of High Rate Capability

The all-solid-state rechargeable battery cells of Examples 1-1 to 1-3 and Comparative Examples 1-1 to 1-3 were charged to 4.25 V at a constant current of 0.1 C and charged to 0.05 C at a constant voltage to measure charge capacity and then, discharged to 2.5 V at a constant current of 0.1 C to measure discharge capacity at 45 °C

Subsequently, the all-solid-state rechargeable battery cells were charged to 4.25 V at a constant current of 0.1 C and to 0.05 C at a constant voltage to measure charge capacity and then, discharged to 2.5 V at a constant current of 1.0 C at 45 °C to measure discharge capacity.

A ratio of the discharge capacity at 1.0C to the discharge capacity at 0.1C was calculated and shown as capacity realization ratio (%) in Table 1.

### Evaluation Example 1-2: Evaluation of Penetration Safety

The all-solid-state rechargeable battery cells of Examples 1-1 to 1-3 and Comparative Examples 1-1 to 1-3 were charged at a constant current of 0.1 C to 4.25 V and at a constant voltage to 0.05 C at 45 °C.

The charged all-solid-state rechargeable battery cells were allowed to stand for 1 hour at room temperature to evaluate penetration safety.

The penetration safety evaluation was performed by using the center of each of the all-solid-state rechargeable battery cells with a stainless steel nail with a diameter of 3 mm at 50 mm/s. Herein, 'OK' was given to no ignition, but 'NG' was given to ignition, and the results are shown in Table 1.

**(Table 1)**

| | Safety functional layer composition | Thickness (µm) | Capacity realization ratio (1.0C/0.1C, %) | Evaluation results of penetration safety |
|---|---|---|---|---|
| Example 1-1 | LiFePO₄ | 5 | 86.8 | OK |
| Example 1-2 | LiFePO₄ | 8 | 86.9 | OK |
| Example 1-3 | LiFePO₄ | 10 | 86.8 | OK |
| Comparative Example 1-1 | - | - | 87.3 | NG |
| Comparative Example 1-2 | LiFePO₄ | 3 | 87.1 | NG |
| Comparative Example 1-3 | LiFePO₄ | 15 | 77.6 | OK |

Referring to Table 1, the all-solid-state rechargeable battery cells of Examples 1-1 to 1-3 exhibited excellent penetration safety, compared to the cells of Comparative Examples 1-1 to 1-2 and also, similar capacity realization rates to the battery cells of Comparative Examples 1-1 to 1-2.

In addition, in the case of Comparative Example 1-3, the penetration safety evaluation results were excellent, but the thickness of the safety functional layer was too thick, and thus the capacity realization rate of the battery cell was significantly lower than that of Examples.

### Evaluation Example 2-1: Evaluation of Capacity and Cycle-life Characteristics

The all-solid-state rechargeable battery cells manufactured in Examples 2-1 to 2-5 and Comparative Example 2-1 were charged at 45 °C with a constant current of 0.1 C to 4.25 V and at a constant voltage to 0.05 C to measure the charging capacity. Then, the all-solid-state rechargeable battery cells were discharged to 2.5 V at a constant current of 0.1 C to measure the initial discharge capacity. The ratio of the initial discharge capacity to the charge capacity was calculated as initial charge/discharge efficiency (%) and is shown in Table 2.

Then, the all-solid-state rechargeable battery cells manufactured in Examples 2-1 to 2-5 and Comparative Example 2-1 were charged at 0.33 C and discharged at 0.33 C in a voltage range of 2.5 V to 4.25 V at 45 °C which were repeated 50 cycles to evaluate cycle-life characteristics. The ratio of the discharge capacity after 50 cycles to the initial discharge capacity was calculated as a capacity retention rate (%) and is shown in Table 2.

### Evaluation Example 2-2: Evaluation of Penetration Safety

The all-solid-state rechargeable battery cells of Examples 2-1 to 2-5 and Comparative Example 2-1 were charged at a constant current of 0.1 C to 4.25 V and at a constant voltage to 0.05 C at 45 °C. The charged all-solid-state rechargeable battery cells were allowed to stand for 1 hour at room temperature to evaluate penetration safety.

The penetration safety evaluation was performed by using the center of each of the all-solid-state rechargeable battery cells with a stainless steel nail with a diameter of 3 mm at 50 mm/s. Herein, 'OK' was given to no ignition, but 'NG' was given to ignition, and the results are shown in Table 2.

**(Table 2)**

| | Safety functional layer composition LiFePO₄: Li₆PS₅Cl | Initial discharge capacity (mAh/g) | Initial charge and discharge efficiency (%) | Capacity retention rate (%,@ 50cycle, 45° C) | Penetration safety |
|---|---|---|---|---|---|
| Example 2-1 | 95:5 | 206 | 84.8 | 85.2 | OK |
| Example 2-2 | 90:10 | 206 | 84.8 | 85.3 | OK |
| Example 2-3 | 85:15 | 207 | 85.3 | 85.3 | OK |
| Example 2-4 | 80:20 | 207 | 85.2 | 85.4 | OK |
| Example 2-5 | 75:25 | 207 | 85.3 | 85.2 | OK |
| Comparative Example 2-1 | - | 208 | 84.2 | 84.7 | NG |

Referring to Table 2, in the case of the all-solid-state rechargeable battery cells of Examples 2-1 to 2-4, penetration safety was superior to Comparative Example 2-1, and the capacity and cycle-life characteristics of the battery cells were similar to Comparative Example 2-1.

### Evaluation Example 3-1: Evaluation of High Rate Capability

The all-solid-state rechargeable battery cells of Examples 3-1 to 3-8 and Comparative Example 3-1 were charged to 4.25 V at a constant current of 0.1 C and charged to 0.05 C at a constant voltage to measure charge capacity and then, discharged to 2.5 V at a constant current of 0.1 C to measure discharge capacity at 45 °C.

Subsequently, the all-solid-state rechargeable battery cells were charged to 4.25 V at a constant current of 0.1 C and to 0.05 C at a constant voltage to measure charge capacity and then, discharged to 2.5 V at a constant current of 1.0 C at 45 °C to measure discharge capacity.

A ratio of the discharge capacity at 1.0 C to the discharge capacity at 0.1 C was calculated and then, shown as a capacity realization rate (%) in Table 3.

### Evaluation Example 3-2: Evaluation of Penetration Safety

The all-solid-state rechargeable battery cells of Examples 3-1 to 3-8 and Comparative Example 3-1 were charged at a constant current of 0.1 C to 4.25 V and at a constant voltage to 0.05 C at 45 °C.

The charged all-solid-state rechargeable battery cells were allowed to stand for 1 hour at room temperature to evaluate penetration safety.

The penetration safety evaluation was performed by using the center of each of the all-solid-state rechargeable battery cells with a stainless steel nail with a diameter of 3 mm at 50 mm/s. Herein, 'OK' was given to no ignition, but 'NG' was given to ignition, and the results are shown in Table 3.

**(Table 3)**

| | Safety functional layer composition | | Capacity realization rate (1.0C/0.1C, %) | Evaluation of penetration safety |
|---|---|---|---|---|
| | LiFePO₄: Li₆PS₅Cl | Amount of conductive material (parts by weight) | | |
| Example 3-1 | 85:15 | 0.5 | 86.8 | OK |
| Example 3-2 | 85:15 | 1 | 86.7 | OK |
| Example 3-3 | 85:15 | 3 | 86.8 | OK |
| Example 3-4 | 85:15 | 5 | 86.8 | OK |
| Example 3-5 | 85:15 | 8 | 86.7 | OK |
| Example 3-6 | 85:15 | 10 | 86.9 | OK |
| Example 3-7 | 85:15 | 12 | 87.0 | OK |
| Example 3-8 | 85:15 | 15 | 87.1 | OK |
| Comparative Example 3-1 | - | - | 87.3 | NG |

Referring to Table 3, in the case of the all-solid-state rechargeable battery cells of Examples 3-1 to 3-8, penetration safety was superior to those of Comparative Example 3-1, and also, equivalent capacity realization rate to the battery cell of Comparative Example 3-1.

While this disclosure has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### <Description of symbols>

100: all-solid-state rechargeable battery 200: positive electrode
201: positive electrode current collector
203: positive electrode active material layer
205: safety functional layer
300: solid electrolyte layer
400: negative electrode
401: negative electrode current collector
403: negative electrode active material layer
400': precipitation-type negative electrode
404: lithium metal layer
405: negative electrode coating layer
500: elastic layer

## Claims

1. An all-solid-state rechargeable battery, comprising
a positive electrode including a positive electrode current collector, a positive electrode active material layer on the positive electrode current collector, and a safety functional layer on the positive electrode active material layer;
a negative electrode; and
a solid electrolyte layer between the positive electrode and the negative electrode,
wherein the positive electrode active material layer includes a positive electrode active material and a sulfide-based solid electrolyte,
the safety functional layer includes an olivine-based positive electrode active material, and
the solid electrolyte layer includes the sulfide-based solid electrolyte.

2. The all-solid-state rechargeable battery as claimed in claim 1, wherein
an olivine-based positive electrode active material includes lithium iron phosphate, lithium manganese iron phosphate, lithium manganese phosphate, lithium titanium phosphate, or a combination thereof.

3. The all-solid-state rechargeable battery as claimed in claim 1, wherein
the olivine-based positive electrode active material is represented by Chemical Formula 1, Chemical Formula 2, Chemical Formula 3, Chemical Formula 4, or Chemical Formula 5:
[Chemical Formula 1] Liₐ₁Fe₍₁₋ₓ₁₎M¹ₓ₁PO₄
wherein, in Chemical Formula 1, 0.90≤a1≤1.5, 0≤x1≤0.4, and M¹ is Al, Ca, Ce, Cr, Cu, Co, La, Mg, Mo, Nb, Ni, Sn, Sr, V, W, Y, Zn, Zr, or a combination thereof,
[Chemical Formula 2] Liₐ₂Mnₓ₂Fe_{(1-x2-y2)}M²_{y2}PO₄
wherein, in Chemical Formula 2, 0.90≤a2≤1.5, 0.1≤x2≤0.9, and M² is Al, Ca, Ce, Cr, Cu, Co, La, Mg, Mo, Nb, Ni, Sn, Sr, V, W, Y, Zn, Zr, or a combination thereof,
[Chemical Formula 3] Liₐ₃Mn₍₁₋ₓ₃₎M³ₓ₃PO₄
wherein, in Chemical Formula 3, 0.90≤a3≤1.5, 0≤x3≤0.4, and M³ is Al, Ca, Ce, Cr, Cu, Co, La, Mg, Mo, Nb, Ni, Sn, Sr, V, W, Y, Zn, Zr, or a combination thereof,
[Chemical Formula 4] Liₐ₄Ti₍₂₋ₓ₄)M⁴ₓ₄(PO₄)₃
wherein, in Chemical Formula 4, 0.90≤a4≤1.5, 0≤x4≤0.4, and M⁴ is Al, Ca, Ce, Cr, Cu, Co, La, Mg, Mo, Nb, Ni, Sn, Sr, V, W, Y, Zn, Zr, or a combination thereof, and
[Chemical Formula 5] Liₐ₅Ti₍₁₋ₓ₅₎M⁵ₓ₅PO₅
wherein, in Chemical Formula 5, 0.90≤a5≤1.5, 0≤x5≤0.4, and M⁵ is Al, Ca, Ce, Cr, Cu, Co, La, Mg, Mo, Nb, Ni, Sn, Sr, V, W, Y, Zn, Zr, or a combination thereof.

4. The all-solid-state rechargeable battery as claimed in claim 1, wherein
the olivine-based positive electrode active material includes LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, LiMnPO₄, LiTiPO₅, LiTi₂(PO₄)₃, or a combination thereof.

5. The all-solid-state rechargeable battery as claimed in claim 1, wherein
an average particle diameter (D₅₀) of the olivine-based positive electrode active material is 10 nm to 2 µm.

6. The all-solid-state rechargeable battery as claimed in claim 1, wherein
the olivine-based positive electrode active material is included in an amount of 70 wt% to 99.9 wt% based on 100 wt% of the safety functional layer.

7. The all-solid-state rechargeable battery as claimed in claim 1, wherein
the safety functional layer further includes a sulfide-based solid electrolyte.

8. The all-solid-state rechargeable battery as claimed in claim 7, wherein
the sulfide-based solid electrolyte is included in an amount of 1 wt% to 30 wt% based on 100 wt% of the safety functional layer.

9. The all-solid-state rechargeable battery as claimed in claim 7, wherein
a weight ratio of the olivine-based positive electrode active material and the sulfide-based solid electrolyte included in the safety functional layer is 70:30 to 97:3.

10. The all-solid-state rechargeable battery as claimed in claim 7, wherein
an average particle diameter (D₅₀) of the sulfide-based solid electrolyte included in the safety functional layer is 0.1 µm to 1.9 µm.

11. The all-solid-state rechargeable battery as claimed in claim 1, wherein
the safety functional layer further includes a conductive material.

12. The all-solid-state rechargeable battery as claimed in claim 11, wherein
the conductive material includes a carbon-based material, a metal-based material, a conductive polymer, or a mixture thereof.

13. The all-solid-state rechargeable battery as claimed in claim 11, wherein
the conductive material is a carbon nanotube, a carbon nanofiber, or a combination thereof.

14. The all-solid-state rechargeable battery as claimed in claim 11, wherein
the conductive material is included in an amount of 1 wt% to 15 wt% based on 100 wt% of the safety functional layer.

15. The all-solid-state rechargeable battery as claimed in claim 1, wherein
the safety functional layer further includes a binder, and
the binder includes polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or a combination thereof.

16. The all-solid-state rechargeable battery as claimed in claim 15, wherein:
the binder is included in an amount of 0.1 wt% to 25 wt% based on safety 100 wt% of the safety functional layer.

17. The all-solid-state rechargeable battery as claimed in claim 1, wherein:
the positive electrode active material included in the positive electrode active material layer includes a lithium nickel-based oxide represented by Chemical Formula or lithium cobalt-based oxide represented by Chemical Formula 7:
[Chemical Formula 6] Liₐ₆Niₓ₆M⁶_{y6}M⁷_{z6}O_{2-b6}X_{b6}
wherein, in Chemical Formula 6, 0.9≤a6≤1.8, 0.3≤x6≤1, 0≤y6≤0.7, 0≤z6≤ 0.7, 0.9≤x6+y6+z6≤1.1, and 0≤b6≤0.1, M⁶ and M⁷ are each independently one or more elements selected from Al, B, Ba, Ca, Ce, Co, Cr, Cu, Fe, Mg, Mn, Mo, Nb, Si, Sn, Sr, Ti, V, W, and Zr, and X is one or more elements selected from F, P and S, and
[Chemical Formula 7] Liₐ₇Coₓ₇M⁸_{y7}O_{2-b7}X_{b7}
wherein, in Chemical Formula 7, 0.9≤a7≤1.8, 0.7≤x7≤1, 0≤y7≤0.3, 0.9≤ x7+y7≤1.1, and 0≤b7≤0.1, M⁸ is one or more elements selected from Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from F, P, and S.

18. The all-solid-state rechargeable battery as claimed in claim 1, wherein
an average particle diameter (D₅₀) of the positive electrode active material included in the positive electrode active material layer is 1 µm to 25 µm.

19. The all-solid-state rechargeable battery as claimed in claim 7, wherein
the sulfide-based solid electrolyte of the positive electrode active material layer, the sulfide-based solid electrolyte of the safety functional layer, and the sulfide-based solid electrolyte of the solid electrolyte layer are the same or different from each other, and each includes argyrodite-type sulfide.

20. The all-solid-state rechargeable battery as claimed in claim 19, wherein:
the argyrodite sulfide includes a compound represented by Chemical Formula 10:
[Chemical Formula 10] (LiₐM¹¹_{b}M¹²_{c})(P_{d}M¹³ₑ)(S_{f}M¹⁴_{g})Xₕ
wherein, in Chemical Formula 10, 4 ≤ a ≤ 8, M¹¹ is Mg, Cu, Ag, or a combination thereof, 0≤b<0.5, M¹² is Na, K, or a combination thereof, 0 ≤c<0.5, M¹³ is Sn, Zn, Si, Sb, Ge, or a combination thereof, 0<d<4, 0≤e<1, M¹⁴ is O, SOₙ, or a combination thereof, 1.5 ≤n ≤5, 3 ≤f ≤12, 0 ≤g<2, X is F, Cl, Br, I, or a combination thereof, and 0≤h≤2.

21. The all-solid-state rechargeable battery as claimed in claim 19, wherein
the argyrodite-type sulfide includes Li₃PS₄, Li₇P₃b₁₁, Li₇PS₆, Li₆PS₅Cl, Li₆PS₅Br, Li_{5.8}PS_{4.8}Cl_{1.2}, Li_{6.2}PS_{5.2}Br_{0.8}, Li_{5.75}PS_{4.75}Cl_{1.25}, (Li_{5.69}Cu_{0.06})PS_{4.75}Cl_{1.25}, (Li_{5.72}Cu_{0.03})PS_{4.75}Cl_{1.25}, (Li_{5.69}Cu_{0.06})P(S_{4.70}(SO₄)_{0.05})Cl_{1.25}, (Li_{5.69}Cu_{0.06})P(S_{4.60}(SO₄)_{0.15})Cl_{1.25}, (Li_{5.72}Cu_{0.03})P(S_{4.725}(SO₄)_{0.025})Cl_{1.25}, (Li_{5.72}Na_{0.03})P(S_{4.725}(SO₄)_{0.025})Cl_{1.25}, Li_{5.75}P(S_{4.725}(SO₄)_{0.025})Cl_{1.25}, or a combination thereof.

22. The all-solid-state rechargeable battery as claimed in claim 1, wherein
the sulfide-based solid electrolyte of the positive electrode active material layer has an average particle diameter (D₅₀) of 0.1 µm to 1.9 µm and the sulfide-based solid electrolyte of the solid electrolyte layer has an average particle diameter (D₅₀) of 2 µm to 5 µm.

23. The all-solid-state rechargeable battery as claimed in claim 1, wherein
the sulfide-based solid electrolyte is included in an amount of 0.1 wt% to 35 wt% based on 100 wt% of the positive electrode active material layer.

24. The all-solid-state rechargeable battery as claimed in claim 1, wherein
a thickness of the safety functional layer is 1 µm to 15 µm.

25. The all-solid-state rechargeable battery as claimed in claim 1, wherein:
a thickness of the solid electrolyte layer is 5 µm to 200 µm.

26. The all-solid-state rechargeable battery as claimed in claim 1, wherein:
the negative electrode includes a negative electrode current collector; a negative electrode coating layer disposed on the negative electrode current collector and including a carbon material, a lithiophilic metal, or a combination thereof; and a lithium metal layer disposed between the negative electrode current collector and the negative electrode coating layer and formed by charging.
